# EUROPEAN PATENT APPLICATION

(11) **EP 1 792 782 A1**
(43) Date of publication of application: **06.06.2007**
(21) Application number: 06123451.4
(22) Date of filing: 03.11.2006
(51) Int. Cl.: B60R 7/08, B60R 1/12

(54) **Mirror assembly**

(30) Priority: 30.11.2005 GB 0524396
(71) Applicant: Nissan Motor Manufacturing (UK) Ltd., Cranfield, Bedfordshire MK43 0DB (GB)
(72) Inventor: Davies, John Nissan Motor Manufacturing (UK) Ltd, Cranfield, Bedfordshire MK43 0DB (GB)
(74) Representative: Hufton, Victoria Alice

(57) **Abstract**

A rear view mirror assembly (12) for a vehicle is provided. The assembly comprises a first portion rigidly attached to the vehicle; a mirror mounted on the first portion; and a second portion forming, with the first portion, a storage means. The second portion is movable relative to the first portion to enable access to the storage means.

## Description

The present invention relates to a rear view mirror assembly for a vehicle.

A rear view mirror assembly for a vehicle is typically mounted to the head lining adjacent the middle of the vehicle windscreen, or on the windscreen itself using an adhesive backing or on an upper surface of the instrument panel in the case of some convertible or sports cars.

In each case, there is typically a large amount of space between the mirror assembly and the inner surface of the windscreen which is unused and is, in effect, dead space.

The present invention seeks to make use of this space.

Accordingly, the present invention provides a rear view mirror assembly for a vehicle comprising a mirror, a support for said mirror and a storage means behind said mirror for storing a personal item such as sunglasses.

In a preferred form of the invention the storage means is detachably mounted to said support. Alternatively, it may be integral with said support or comprise said support.

Preferably, the storage means has a closure member for enabling access to the interior of said storage means. The closure member is pivotable between a first position wherein said housing is closed and a second position wherein said housing is open to allow access to said item.

The closure member may form a receptacle for receiving said item.

In a further preferred form of the invention the storage means comprises a housing having at least one receptacle for receiving said item and movable between a first position wherein said housing is closed and a second position wherein said housing is open to allow access to said item.

The receptacle is conveniently slidably mounted in said housing for sliding movement between said first and second positions.

Advantageously, the assembly has two said receptacles which are preferably movable independently of one another between said first and second positions.

The present invention is further described hereinafter, by way of example, with reference to the accompanying drawings, in which:
Figure 1 is a diagrammatic side view, partly in section, of a part of a vehicle having a conventional rear view mirror assembly;
Figure 2 is a view similar to that of Figure 1, showing the vehicle having a preferred form of rear view mirror assembly according to the present invention;
Figure 3 is an enlarged view of the mirror assembly of Figure 2;
Figure 4 is a view similar to that of Figure 3, in detail, of a preferred form of assembly according to the invention; and
Figure 5 is a view similar to that of Figure 3, showing a second preferred form of assembly according to the present invention.

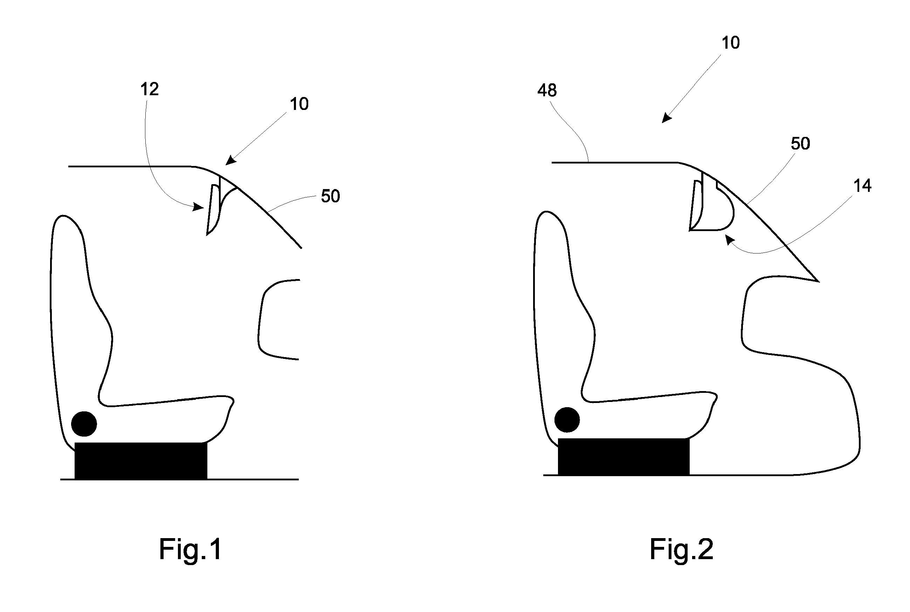

Referring now to the drawings, Figure 1 is a diagrammatic side elevation of a front portion 10 of a vehicle, partly in section, showing a typical position of a conventional rear view mirror assembly 12 mounted on a windscreen 50. As can be seen from the drawing, there is a large amount of space between the mirror assembly and the inner surface of the windscreen which is unused.

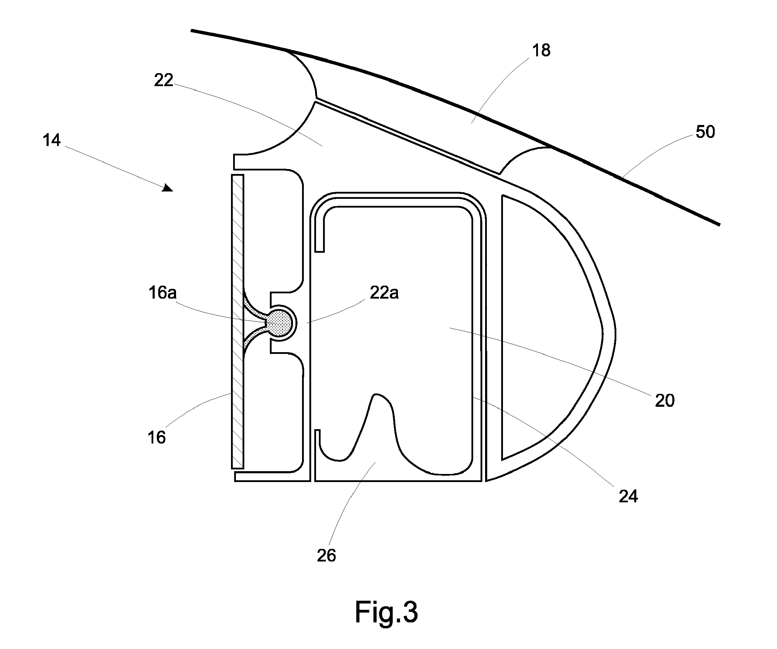

Figure 2 is a view similar to that of Figure 1, but showing the mounting of a preferred embodiment of rear view mirror assembly 14, according to the present invention. The mirror assembly 14 of Figure 2 is shown enlarged in Figure 3, in side elevation and partly in section. The assembly 14 has a mirror 16, a support 18, which supports the mirror and mounts it, in case of Figure 3, to the inside of the windscreen 50. The assembly 14 also has a storage means 20, in a form of a storage compartment, which sits behind the mirror 16 and provides storage space for personal items such as sunglasses. The storage compartment 20 is accommodated behind the mirror 16 in the gap between the mirror and the windscreen without compromising the mirrors' primary role.

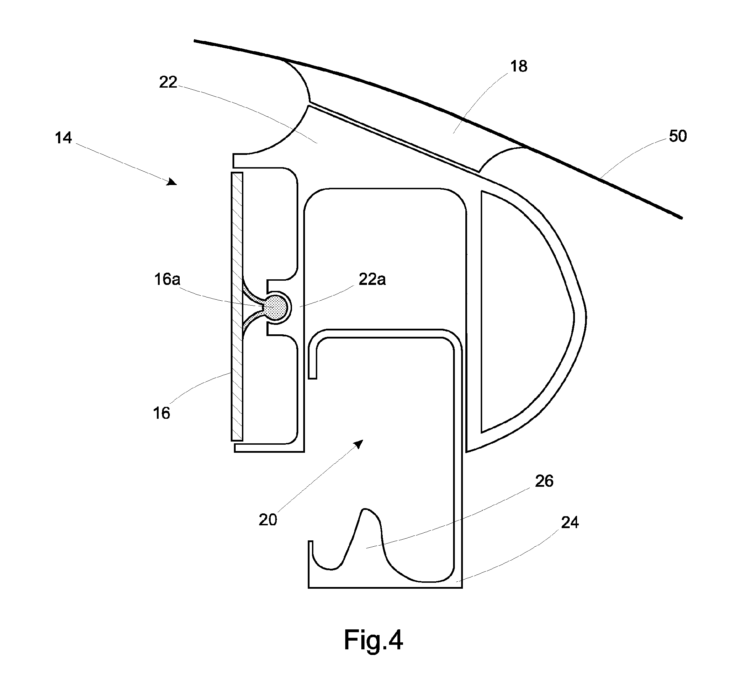

Referring now to Figure 4, this shows further detail of the assembly of Figure 3.

The storage means 20 has a housing 22 with a receptacle in the form of a drawer 24. The drawer 24 is slideable between a first position in which it is fully retained within the housing 22 and a second position in which the drawer is fully extended, as shown in Figure 4, to allow a user access to the drawer to retrieve or insert, for example, a pair of sunglasses. In the case of the embodiment shown in Figure 4, the drawer has a nose piece 26 conveniently shaped as a bridge for the sunglasses.

The drawer of Figure 4 is shown slideable in a generally vertical direction into and out of the housing 22. However, it will be appreciated that the drawer could equally be slideable in a generally horizontal direction, either to the right or to the left of the assembly 14.

For an assembly which is mounted, for example, on the upper surface of a vehicle instrument panel, the drawer 24 could be accessible from above the mirror assembly 14 and slideable in a generally vertical direction, such that in its open position, the drawer 24 is positioned above the housing 22.

A spring locking mechanism (not shown in the drawings) may be used to lock the drawer 24 closed, the locking mechanism conveniently being of the kind that locks the drawer 24 when it is moved from its second to its first position, and releases the drawer 24 when closing pressure is applied to the drawer 24 when the latter is in its first, closed position.

The drawer 24 is also conveniently mounted on guides (not shown in the drawings) and its movement may be controlled or damped by a suitable mechanism which, in conjunction with the locking mechanism, slowly releases the drawer 24 or, on closing pressure applied by a user to the drawer when the drawer 24 is open, retracts the drawer into its closed position.

Such mechanisms are commonplace in the automotive industry and are therefore not described further here.

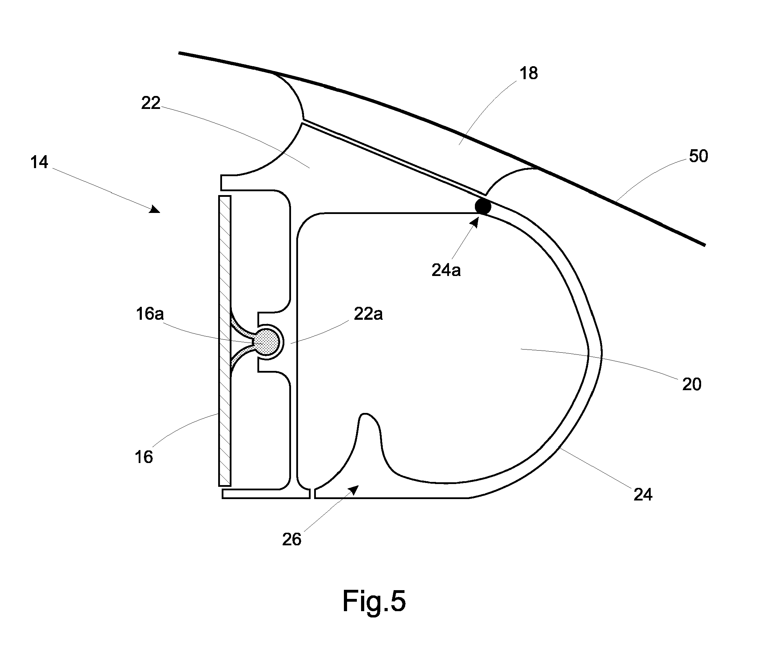

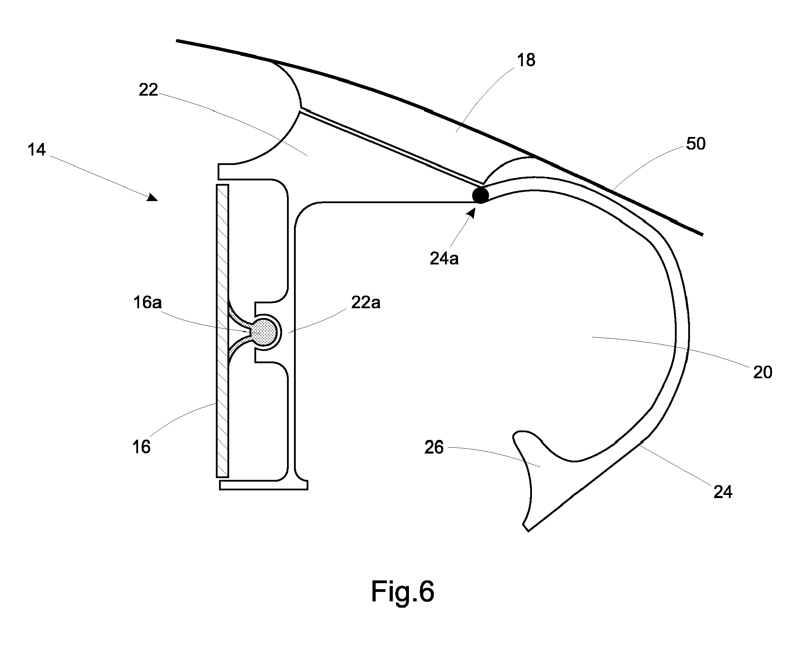

Referring now to Figure 5, this shows a second embodiment of mirror assembly according to the present invention, in which like parts are given like reference numbers.

In the assembly of Figure 5, the receptacle 24 is in the form of a hinged closure member. The closure member 24 is pivoted about pivot 30 to the housing 22 and is pivotable in the direction of the arrows A, B between a first, fully closed position in which the storage compartment is closed, and a fully open position as shown in Figure 5, for removing or inserting the personal item. In the case of the illustrated assembly, the personal item is again a pair of sunglasses and as can be seen from Figure 5, the closure member 24 is formed with bridge 26 for location of the sunglasses.

The assembly of Figure 5 is mounted on the windscreen 50 and therefore the closure member 24 is pivoted at an upper region of the housing 22. However, where the assembly it intended for use or mounting on the dashboard of a vehicle, the closure member 24 would be inverted and pivotally mounted to a lower region of the housing 22, such that the compartment is accessible from above the assembly.

The closure member 24 of Figure 5 is shaped such that it actually supports the pair of sunglasses in the closed position, by way of its lower edge region 34. However, it will be appreciated that the housing could be shaped such that the closure member 24 serves only to close the housing whilst the personal item is actually fully supported within the housing itself. It will also be appreciated, however, that such an arrangement would make it more difficult to retrieve the personal item and is not, therefore, the most advantageous form of the invention.

Where space permits, the mirror assembly could have several storage compartments. In the case of the embodiment of Figure 4, the assembly could have several drawers 24 located either side by side across the width of the mirror or one behind the other. In the case of the embodiment of Figure 5, the assembly could have several closure members 24 closing individual compartments, but for most forms of the assembly these would have to be located side by side along the width of the mirror.

The mirror assembly could also have a number of pre-set adjustable driving positions to suit particular drivers. The pre-set position for a selected driver could be stored in a suitable control system, and a locking mechanism for the receptacle 24 controlled by the control system to allow access to the storage compartment when the mirror is in the pre-set position for the selected driver. Where several compartments are provided, then each compartment can be allocated to a particular driver and access controlled accordingly.

Finally, the locking mechanism for the drawer or closure member 24 may be controlled in dependence on one or more parameters, such as the state of the engine ignition and/or the sun level. The aforementioned control system may be used to monitor the sun level and, when the ignition of the vehicle is turned on, to open the closure member or drawer 24 to reveal the driver sunglasses prior to the driver moving off in the vehicle.

The support 18 and housing 20 of the assembly may be formed integral with one another during manufacture of the assembly. Alternatively, the housing 20 may be formed as an "add on" and may be secured to the mirror support 18 by any suitable means such as, for example, double sided adhesive tape.

## Claims

1. A rear view mirror assembly for a vehicle, the assembly comprising:
a first portion rigidly attached to the vehicle;
a mirror (16) mounted on the first portion; and
a second portion forming, with the first portion, a storage means (20);
wherein the second portion is movable relative to the first portion to enable access to the storage means (20).

2. The rear view mirror assembly according to claim 1, wherein the mirror (16) is adjustable about two axes relative to the vehicle.

3. The rear view mirror assembly according to claim 1 or claim 2, wherein the first portion is a support (18).

4. The rear view mirror assembly according to any of the preceding claims, wherein the second portion is a housing (22).

5. The rear view mirror assembly according to any of the preceding claims, wherein the storage means (20) is capable of holding a personal item such as sunglasses.

6. The rear view mirror assembly as claimed in claim 3, wherein said storage means (20) is detachably mounted to said support (18).

7. The rear view mirror assembly as claimed in claim 3, wherein said storage means (20) is integral with said support (18).

8. The rear view mirror assembly as claimed in any of the preceding claims, wherein said storage means (20) has a closure member (24) for enabling access to the interior of said storage means.

9. The rear view mirror assembly as claimed in claim 8, wherein said closure member (24) is pivotable between a first position wherein said housing (22) is closed and a second position wherein said housing (22) is open to allow access to said item.

10. The rear view mirror assembly as claimed in claim 8, wherein said closure member (24) is slidably mounted in said housing (22) for sliding movement between said first and second positions.
